# EUROPEAN PATENT APPLICATION

(11) **EP 4 653 936 A1**
(43) Date of publication of application: **26.11.2025**
(21) Application number: 24305802.1
(22) Date of filing: 23.05.2024
(51) Int. Cl.: G02B 26/08

(54) **SELF-ALIGNING ILLUMINATION SYSTEM AND METHOD FOR ALIGNING THE LIGHT SOURCE OF SUCH A SYSTEM**

(71) Applicant: Pasqal, 91300 Massy (FR)
(72) Inventor: ROCHE, Sylvain, 91300 MASSY (FR); DUTARTRE, Sylvain, 91300 MASSY (FR)
(74) Representative: Lavoix

(57) **Abstract**

A self-aligning illumination system (15) for a quantum system (10) comprises a light source (20); a movable alignment unit (30) configured for controlling a direction of an output beam (82), at least part of which forms an illumination beam (84); a sampling unit (45) configured for forming at least two calibration beams (93, 94) from at least part of the output beam (82) received by a detection unit (55), configured for forming at least a first calibration point (A1) on a first detection surface (D1) and a second calibration point on a second detection surface (D2) respectively representative of a first position and a second position of the illumination beam (84) after respectively a first travel distance and a second travel distance less than the first travel distance; an electronic control device (60) configured for determining at least one positioning instruction of the alignment unit (30) based on a comparison of a position of the first and the second calibration points (A1, A2) with a respective reference position (A1-al, A2-al), such that, once the alignment unit (30) is positioned according to said positioning instruction, the illumination direction is aligned with a predetermined direction (Y1).

## Description

### TECHNICAL FIELD OF THE INVENTION

The present invention concerns a self-aligning illumination system for a quantum system, a quantum system comprising such a self-aligning illumination system and a method for aligning the light source of such a self-aligning illumination system.

### BACKGROUND OF THE INVENTION

A quantum system, such as a quantum processing unit, a quantum sensor or a quantum cryptographic device, comprises one or more light sources.

Said light source may be intended for irradiating one or more elements of the quantum system by emitting an input light beam having an initial direction allowing to form an illumination light beam travelling in an illumination direction.

By way of non limitative examples, the light source may be a laser source.

In this case, the illumination light beam may be configured for directly or indirectly trapping one or more particles in a trapping site in order to generate a quantum array of qubits or configured for directly or indirectly placing one or more particles of the quantum array of qubits in an excited state, such as an excited Rydberg state.

If the light source is misaligned, i.e. if the initial direction is not accurately positioned, the illumination direction is in consequence misaligned. In this case, the performances of the quantum system may be significantly affected.

For example, if the element to be irradiated is a potential optical fiber implemented downstream the light source and an element to be irradiated, the power injection can be significantly reduced if the illumination light beam is not precisely aligned.

Hence, there is a need for a very precise alignment of some light sources of the quantum system.

In general, the light sources of a quantum system are aligned manually, in a calibration step, before an exploitation phase of the quantum system.

Due to variations in the environmental conditions to which the quantum system is subjected, for example a humidity level or a temperature in the surrounding atmosphere, the light sources may be misaligned more or less often and to a greater or lesser extent. Consequently, there is a need of realignment of the light sources.

To date, the realignment is performed manually, which is time-consuming and limits the industrialization of such quantum systems.

### SUMMARY OF THE INVENTION

Consequently, one aim of the invention is to provide a self-aligning illumination system for a quantum system and a method for aligning a light source of such an illumination system that is fast and easy to implement, allowing to realign the light source as often as needed, an in particular that can be entirely automated.

To this aim, the invention relates to a self-aligning illumination system for a quantum system comprising:
a) a light source, configured for emitting an input light beam having an initial direction;
b) an alignment unit, configured for forming from the input light beam an output beam having a final direction, the alignment unit being at least partially movable and configured for controlling the final direction in translation along at least one longitudinal axis and/or in rotation along at least one rotation axis,
   at least part of the output beam forming an illumination beam having an illumination direction, the illumination direction being determined by the final direction;
c) a sampling unit, configured for forming at least two calibration beams from at least part of the output beam;
d) a detection unit, comprising at least a first optical sensor having a first detection surface and a second optical sensor having a second detection surface, the detection unit being configured for forming, from the at least two calibration beams, at least a first calibration point on the first detection surface and a second calibration point on the second detection surface, the first and second calibration points being respectively representative of a first position and a second position of the illumination beam after respectively a first travel distance and a second travel distance along the illumination direction, the first travel distance being greater than the second travel distance,
e) an electronic control device receiving data from the detection unit and configured for:
   - comparing a position of the first calibration point with a first reference position and a position of the second calibration point with a second reference position, and
   - for determining at least one positioning instruction of the alignment unit based on the comparison, such that, once the alignment unit is positioned according to said positioning instruction, the illumination direction is aligned with a predetermined direction.

The detection unit allows to obtain two different points representative of the illumination direction, namely the first and second calibration points.

The electronic control device allows to compare the positions of the first and second calibration points with a respective reference point and hence to determine whether the illumination direction is in the wished direction or not.

If not, the electronic control device allows to determine how to reposition the alignment unit in order to realign the illumination direction, and to provide the corresponding positioning instructions.

Hence, the alignment unit can be aligned or realigned, for example in an automated manner by means of an actuator receiving the positioning instructions from the electronic control device.

The self-illumination system is consequently easily and rapidly alignable, such that this system can be realigned as frequently as needed, in particular in real time during an exploitation of the quantum system.

According to other advantageous aspects of the invention, the self-aligning illumination system comprises one or more of the following features, taken in isolation or in any technically possible combination:
- the self-aligning illumination system further comprises an actuating unit configured for positioning the alignment unit according to the at least one positioning instruction;
- the alignment unit has at least four degrees of freedom in translation and/or in rotation;
- the alignment unit comprises at least two rotatable mirrors, each rotatable mirror being rotatable relative to at least two respective rotation axes;
- the first and/or the second optical sensor is chosen among a four quadrant photodetector and a camera;
- the sampling unit comprises a beam sampler;
- the sampling unit further comprises a beam splitter;
- the self-aligning illumination system further comprises a polarizing unit configured for selecting part of the input light beam having a specific polarization upstream the alignment unit;
- the polarizing unit comprises a polarizing beam splitter between two half-wave plates.

The invention further relates to a quantum system comprising a self-aligning illumination system according to any of the preceding embodiments.

According to another advantageous aspect of the quantum system according to the invention, the illumination beam formed with the illumination system is configured for trapping at least one particle in a trapping site or for exciting at least one particle.

The invention further relates to a method for aligning the light source of the self-aligning illumination system according to any of the preceding embodiments, the method comprising:
a) with the light source, emitting an input light beam having an initial direction towards the alignment unit;
b) with the alignment unit, forming the output beam;
c) with the sampling unit, forming at least one calibration beam from at least part of the output beam;
d) with the detection unit, detecting a respective first calibration point and a respective second calibration point;
e) with the calculator, comparing a position of the first calibration point with the first reference position and a position of the second calibration point with the second reference position, and if at least one of said positions is different from the respective reference position), determining at least one positioning instruction of the alignment unit; and
f) positioning the alignment unit according to said at least one positioning instruction.

According to other advantageous aspects of the invention, the method comprises one or more of the following features, taken in isolation or in any technically possible combination:
- the alignment unit comprises at least two rotatable mirrors and the at least one positioning instruction comprises:
   * if the position of the first calibration point is offset from the first reference position and :
      # if the position of the second calibration point is offset from the second reference position, instructions of moving the two rotatable mirrors,
      # if not: instructions of moving only any one of the rotatable mirrors, and
   * if not:
      # if the position of the second calibration point is offset from the second reference position, instructions of moving only any one of the rotatable mirrors;
- at least one moving instruction is incremental, step a) to e) and, if applying, step f) being iterated after each iteration of step f) ;
- the method comprises after f):
   e) deactivating the sampling unit, such that the illumination beam is formed from the entire output beam.

### BRIEF DESCRIPTION OF THE DRAWINGS

The invention will be easier to understand in view of the following description, provided solely as an example and with reference to the appended drawings in which:
- Figure 1 is a schematic view of a quantum system comprising a self-aligning illumination system according to the invention;
- Figure 2 is a detailed view of an embodiment of the self-aligning illumination system of figure 1; and
- Figure 3 is a flowchart of the method for aligning the light source of the self-aligning illumination system of figure 1 or 2.

### DETAILED DESCRIPTION OF SOME EMBODIMENTS

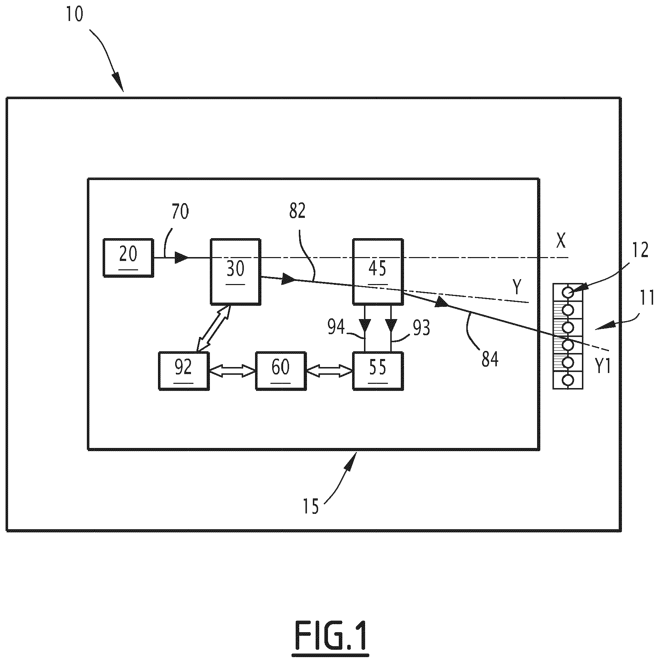

A quantum system 10 according to the invention is described in reference to figure 1.

The quantum system 10 is for example a quantum processing unit, a quantum sensor, a quantum communication device or a quantum cryptographic device.

Typically, the quantum system 10 uses the quantum properties of matter, such as superposition and entanglement, to perform operations on data. Unlike a classical computer based on transistors working on binary data (coded on bits, 0 or 1), the quantum computing device works on qubits whose quantum state can take a continuous rather than discrete number of values.

In particular, a qubit refers to a two-level quantum mechanical system. For example, a qubit comprises two basic quantum states I0> and I1> representing the possible quantum states of the qubit. According to the superposition principle of quantum mechanics, any superposition of the form aI0> + bI1> (a and b being complex numbers and aa*+bb*=1) is a possible quantum state of the qubit.

Examples of quantum processors based on neutral atoms are described in the article Loïc Henriet, Lucas Beguin, Adrien Signoles, Thierry Lahaye, Antoine Browaeys, Georges-Olivier Reymond, and Christophe Jurczak. Quantum computing with neutral atoms. Quantum, 4:327, September 2020. ISSN 2521-327X. doi:10.22331/q-2020-09-21-327. Other embodiments are nonetheless possible.

The quantum system 10 is not represented in details in the figures.

The quantum system 10 comprises for example a quantum processor comprising a qubit array 11 of qubits 12, as well as hardware for manipulating these qubits 12 (e.g., for assembling the qubit array 11 and/or reading or modifying the state of some or all of the qubits 12), and of at least one self-aligning illumination system 15.

Preferably, the qubits 12 are particles chosen among the following particles: neutral atoms, superconducting qubits, Nitrogen-Vacancy centers, Silicon-Vacancy centers, ions, molecules and quantum dots.

The self-aligning illumination system 15 comprises:
a) a light source 20;
b) an at least partially movable alignment unit 30;
c) a sampling unit 45;
d) a detection unit 55; and
e) a electronic control device 60.

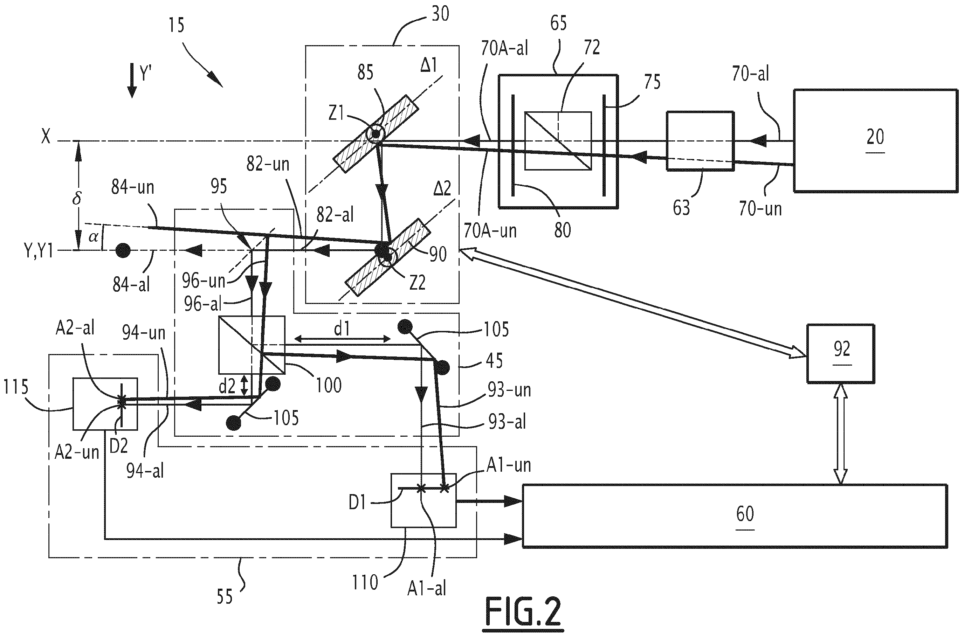

The self-aligning illumination system 15 optionally comprises an optical isolation unit 63 and/or a polarizing unit 65 illustrated in figure 2.

The light source 20 is configured for emitting an input light beam 70 having an initial direction.

The light source 20 is for example a laser source.

If the light source 20 is aligned when the alignment unit 30 is in a reference initialization position which will be described later, the initial direction of the input light beam 70 is a predetermined initial alignment direction X, as shown in figures 1 and 2.

Figure 2 shows two optical light paths, respectively in a first case, in thin line, where the light source 20 is aligned and in a second case, in thick line, where the light source 20 is misaligned and the alignment unit 30 has not yet been repositioned for alignment of the self-aligning illumination system 15. The reference numbers of the different light beams are followed by "-al" in the case where the light source 20 is aligned and by "-un" in the case in the case where the light source 20 is misaligned.

Optionally, the self-aligning illumination system 15 comprises the polarizing unit 65 upstream the alignment unit 30 relative to the input light beam 70.

The polarizing unit 65 is configured for selecting part 70A of the input light beam 70 having a specific polarization upstream the alignment unit 30.

In a particular embodiment, the polarizing unit 65 comprises a polarizing beam splitter 72 positioned between an input half-wave plate 75 and an output half-wave plate 80. This case is represented in figure 2.

Optionally, the self-aligning illumination system 15 comprises the optical isolation unit 63 upstream the alignment unit 30.

The optical isolation unit 63 is configured for isolating the input light beam 70 from potential reflected light beams.

The optical isolation unit 63 comprises for example at least one optical diode, such as a Faraday rotator.

If applying, the optical isolation unit 63 may be positioned upstream the polarizing unit 65 relative to the input light beam 70, as shown in figure 2.

The alignment unit 30 is configured for receiving the input light beam 70, if applying downstream the polarizing unit 65 and/or downstream the optical isolation unit 63.

The alignment unit 30 is configured for forming from the input light beam 70 an output light beam 82 having a final direction.

The output light beam 82 is hereafter called output beam 82.

The alignment unit 30 is at least partially movable and configured for controlling the final direction in translation along at least one longitudinal axis and/or in rotation along at least one rotation axis, at least part of the output light beam 82 forming an illumination light beam 84 (hereafter, illumination beam 84), the illumination direction being correlated with or equivalently determined by the final direction.

If the light source 20 is aligned when the alignment unit 30 is in the reference initialization position, the final direction of the output beam 82 is a predetermined final alignment direction Y and the illumination direction of the illumination beam 84 is a predetermined illumination alignment direction Y1, as shown in figures 1 and 2.

The alignment unit 30 is in particular configured for allowing aligning the final direction with the predetermined final alignment direction Y.

In the example of figure 1, the predetermined final alignment direction Y and the predetermined illumination alignment direction Y1 are different.

In the example of figure 2, the predetermined final alignment direction Y is the same as the predetermined illumination alignment direction Y1.

In order to allow aligning the final direction of the output light beam 82 with the predetermined final alignment direction Y, the alignment unit 30 is at least partially movable and has at least the suitable degrees of freedom in translation or in rotation for controlling the final direction of the output light beam 82.

In a particular embodiment, the alignment unit 30 has at least four degrees of freedom in translation and/or in rotation.

In a particular embodiment, the alignment unit 30 comprises step-by-step moving means for one or more of its degrees of freedom.

In this case, choosing a step of the moving means allows choosing the accuracy of the positioning of the illumination direction.

In the example of figure 2, the alignment unit 30 comprises a first rotatable mirror 85 and a second rotatable mirror 90.

The first rotatable mirror 85 is for example a metallic or a dielectric mirror.

The first rotatable mirror 85 is rotatable relative to a first transverse axis Z1.

Optionally, the first rotatable mirror 85 is also rotatable relative to a first longitudinal axis Δ1, so as to allow modifying a first incidence plane of the first rotatable mirror 85.

The first longitudinal axis Δ1 is for example orthogonal to the first transverse axis Z1.

In the case of figure 2, the first incidence plane is the plane of figure 2.

The second rotatable mirror 90 is for example a metallic or a dielectric mirror.

The second rotatable mirror 90 is rotatable relative to a second transverse axis Z2.

Optionally, the second rotatable mirror 90 is also rotatable relative to a second longitudinal axis Δ2, so as to allow modifying a second incidence plane of the second rotatable mirror 90.

The second longitudinal axis Δ2 is for example orthogonal to the second transverse axis Z2.

In the case of figure 2, the second incidence plane is also the plane of figure 2, such that the output beam 82 and the illumination beam 84 are contained in the plane of figure 2.

The orientation of the first rotatable mirror 85 relative to the initial direction in combination with the orientation of the second rotatable mirror 90 relative to the first mirror 85 determines the final direction of the output light beam 82 and, as a consequence, the illumination direction of the illumination light beam 84.

Hence, moving one or both of the first and second rotatable mirrors 85, 90 allows modifying the illumination direction without moving the light source 20, in order to form an illumination beam 84-al having the predetermined alignment illumination direction with the misaligned input light beam 70-un.

In particular, moving one or both of the first and second rotatable mirrors 85, 90 allows modifying an angular offset α between the illumination direction of the illumination beam 84 and the predetermined illumination alignment direction Y1 and/or a translational offset δ between the illumination direction of the illumination beam 84 and the predetermined initial alignment direction X along a translation axis Y'.

The corresponding alignment method will be explained later in this description.

In a particular embodiment, the alignment unit 30 comprises an actuating unit 92 configured for positioning the alignment unit 30 according to the at least one positioning instruction.

The alignment unit 30 is placed upstream the sampling unit 45 relative to the output beam 82.

The sampling unit 45 is configured for forming at least two calibration light beams 93, 94 (hereafter, calibration beam 93, 94) from at least part of the output beam 82.

In the example of figure 2, the sampling unit 45 comprises a beam sampler 95 configured for forming the illumination beam 84 with a first part of the output beam 82 and an intermediate calibration beam 96 with a second part of the output beam 82, the intermediate calibration beam 96 having a calibration direction different from the illumination direction of the illumination beam 84.

For example, the calibration direction is orthogonal to the illumination direction of the illumination beam 84 when the light source 20 is aligned and the alignment unit 30 is in the reference initialization position.

In a particular embodiment, the beam sampler 95 is configured such that the power of the illumination beam 84 is more than 90%, advantageously more than 95% of power of the output beam 82.

In the example of figure 2, the sampling unit 45 comprises a beam splitter 100 downstream the beam sampler 95 relative to the intermediate calibration beam 96.

The beam splitter 100 is configured for forming a first calibration beam 93 and a second calibration beam 94 from the intermediate calibration beam 96, the first and second calibration beam 93, 94 having different propagation directions.

In this case, the sampling unit 45 optionally comprises one or more additional mirror 105 configured for redirecting a respective calibration beam 93, 94 towards the detection unit 55.

Alternatively, the sampling unit 45 comprises a first beam splitter configured for receiving at least part of the output beam 82 and for forming the first calibration beam 93 and an intermediate calibration beam 96, and a second beam splitter configured for receiving the intermediate calibration beam 96 and for forming the second calibration beam 94.

In this case, the sampling unit 45 may also optionally comprise the one or more additional mirror 105 configured for redirecting a respective calibration beam 93, 94 towards the detection unit 55.

Generally speaking, the two calibration beams 93, 94 are configured to be received by the detection unit 55 comprising at least a first optical sensor 110 and a second optical sensor 115, and for forming a first calibration point A1 on a first detection surface D1 of the first optical sensor 110 and a second calibration point A2 on a second detection surface D2 of the second optical sensor 115, the first and second calibration points A1, A2 being respectively representative of a first position and a second position of the illumination beam 84 after respectively a first travel distance and a second travel distance along the illumination direction, the first travel distance being greater than the second travel distance.

In the example of figure 2, the first and second calibration beams 93, 94 allow forming respectively the first calibration point A1 on the first detection surface D1 of the first optical sensor 110 and the second calibration point A2 on the second detection surface D2 of the second optical sensor 115.

In this example, the sampling unit 45 comprises a first additional mirror 105 associated with the first calibration beam 93 and positioned at a first distance d1 of an outlet face of the beam splitter 100. The second sampling unit 45 comprises a second additional mirror 105 associated with the second calibration beam 94 and positioned at a second distance d2 of an outlet face of the beam splitter 100. The first distance d1 is greater than the second distance d2. Thanks to this provision, the first and second calibration points A1, A2 are effectively respectively representative of a first position and a second position of the illumination beam 84 after a first travel distance and a second travel distance along the illumination direction, the first travel distance being greater than the second travel distance.

The roles of the first distance d1 and second distance d2 and of the corresponding optical elements could be equivalently exchanged.

In this example, the detection unit 55 comprises the first optical sensor 110 having the first detection surface D1 and the second optical sensor 115 having the second detection surface D2.

More generally, the detection unit 55 is configured for forming, from the at least two calibration light beams 93, 94 at least the first calibration point A1 on the first detection surface D1 and the second calibration point A2 on the second detection surface D2.

In a particular embodiment, the first optical sensor 110 and/or the second optical sensor 115 are each chosen among a four quadrant photodetector and a camera.

The detection unit 55 is configured for exchanging data with the electronic control device 60.

The electronic control device 60 is a classical computer.

The electronic control device 60 is configured for receiving data from the detection unit 55 and for:
- comparing a position of the first calibration point A1 with a first reference position and a position of the second calibration point A2 with the second reference position, and
- for determining at least one positioning instruction of the alignment unit 30 based on the comparison, such that, once the alignment unit 30 is positioned according to said positioning instruction, the illumination direction is aligned with a predetermined illumination direction.

In particular, the electronic control device 60 is configured for receiving, from the detection unit 55, data representative of a position of the first calibration point A1 in the detection surface D1 and data representative of a position of the second calibration point A2 in the detection surface D2.

The electronic control device 60 is further configured for comparing the position of the first calibration point A1 with the first reference position and the position of the second calibration point A2 with the second reference position.

In the example of figure 2, the first reference position is A1-al and the second reference position is A2-al, these positions being obtained when the alignment unit 30 is in a reference initialization position, represented in a particular embodiment in figure 2, and when the light source 20 is simultaneously aligned, or in other words, when the initial direction is the initial alignment direction X.

The electronic control device 60 is further configured for determining at least one positioning instruction of the alignment unit 30 based on the comparison, such that, once the alignment unit 30 is positioned according to said positioning instruction, the illumination direction is aligned with a predetermined direction, namely the predetermined illumination alignment direction Y1.

If applying, the electronic control device 60 is also configured for transmitting the at least one positioning instruction to the actuating unit 92.

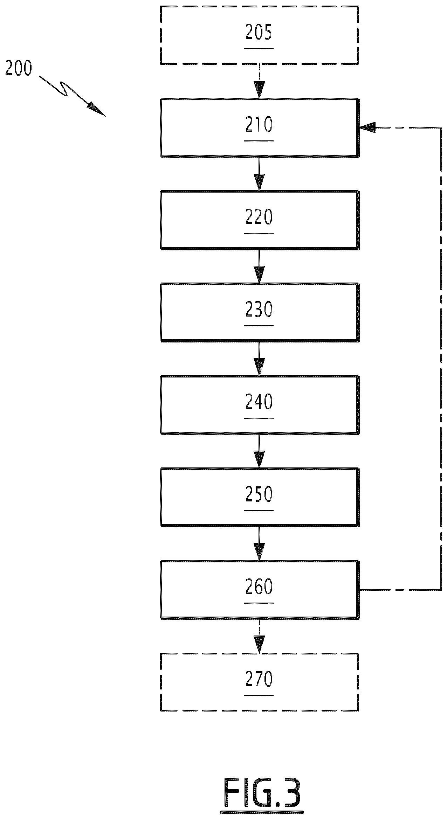

An alignment method 200 for aligning the light source 20 of the self-aligning illumination system 15 will now be described in reference to figure 3.

The alignment method 200 comprises an emission step 210, at which the light source 20 emits the input light beam 70 towards the alignment unit 30.

Optionally, the alignment unit 30 is positioned according to the reference initialization position in a prior initialization step 205.

As an example, illustrated in figure 2, the first and second rotatable mirrors 85, 90 are positioned parallel to each other and such that a direction normal to an input face of each of these mirrors forms an angle of 45° with the initial alignment direction X.

After the emission step 210, the alignment method 200 comprises an output beam formation step 220, at which the alignment unit 30 forms the output beam 82 from the input light beam 70.

Then, the alignment method 200 comprises a calibration beam formation step 230, at which the sampling unit 45 forms the at least two calibration beams 93, 94 from at least part of the output beam 82.

If, at the same time, the illumination beam 84 is formed from at least part of the output beam 82, the final direction of the output beam 82 determines a respective direction of each of the at least one calibration beam 93, 94 and the illumination direction, all these directions being correlated with the final direction and, as a consequence with the initial direction in association with a current position of the alignment unit 30.

Then, the alignment method 200 comprises a detection step 240, at which the detection unit 55 detects the first calibration point A1 on the first detection surface D1 and the second calibration point A2 on the second detection surface D2.

The alignment method 200 further comprises a comparison step 250 at which the electronic control device 60 compares the position of the first calibration point A1 in the first detection surface D1 with the first reference position A1-al and the position of the second calibration point A2 in the second detection surface D2 with the second reference position A2-al.

If at least one of said detected positions is different from the respective reference position A1-al, A2-al, the comparison step 250 comprises the determination of at least one positioning instruction of the alignment unit 30.

In a first embodiment of the alignment method 200, the at least one positioning instruction is determined such that, after a positioning step 260 described hereafter, the illumination direction of a potential illumination beam 84 formed from at least part of the output beam 82 is the illumination alignment direction Y1.

For example, in case the alignment unit 30 comprises the first and second rotatable mirrors 85, 90, the at least positioning instruction can be determined according to the following algorithm:
- if the position of the first calibration point A1 is different from the first reference position A1-al:
   * if the position of the second calibration point A2 is different from the second reference position A2-al, the at least one positioning instruction comprises instructions of moving both the first and second rotatable mirrors 85, 90, and if not:
      * the at least one positioning instruction comprises instructions of moving only any one of the first and second rotatable mirrors 85, 90; and
- if not, if the position of the second calibration point A2 is different from the second reference position A2-al, the at least one positioning instruction comprises instructions of moving only any one of the first and second rotatable mirrors 85, 90.

Last, if applying, the alignment method comprises a positioning step 260, at which the alignment unit 30 is positioned according to said at least one positioning instruction.

The positioning step 260 comprising the moving of the at least partially movable alignment unit 30 according to one or more of its degrees of freedom.

For example, at positioning step 260, the actuating unit 92 receives the at least one positioning instruction and commands the positioning of the alignment unit 30 according to said positioning instruction.

Once the alignment unit 30 is positioned, if an illumination beam 84 is formed in response to an input light beam 70 emitted with the light source 20, the illumination direction is the illumination alignment direction Y1.

At this stage, the alignment method 200 optionally comprises a deactivation step 270, at which the sampling unit 45 is deactived such that the illumination beam 84 is formed from the entire output beam 82.

For example, the sampling unit 45 is positioned in a deactivation position, at which the sampling unit 45 does not receive the output beam 82. In this case, the sampling unit 45 may comprise a movable mirror. In the activation position of the sampling unit 45, the movable mirror receives the output beam 82 and forms a reflected beam towards the beam splitter 100, thus allowing the formation of the two calibration beams 93, 94 from the entire output beam 82, optionally after power attenuation, while no illumination beam 84 is formed. In the deactivation position of the sampling unit 45, the movable mirror does not receive the output beam 82, and thus, no calibration beam 93, 94 is formed from the output beam 82, while the illumination beam 84 is formed from the entire output beam 82.

This provision can be implemented if the alignment of the light source 20 is particularly critical for the quantum device 10, or in other words if a misalignment of the light source 20 has particular drawbacks or renders a subsequent illumination useless.

In a second embodiment of the alignment method 200, the at least one positioning instruction is incremental. This means that the at least one positioning instruction is determined such that, after the positioning step 260, the illumination direction of a potential illumination beam 84 formed from at least part of the output beam 82 is closer to the illumination alignment direction Y1 but not necessary the illumination alignment direction Y1 itself.

In this case, the alignment unit 30 advantageously comprises step-by-step moving means.

In this case, at least part of the steps of the alignment method 200 are iterated, as described hereafter, and as represented with alternate dotted lines in figure 2.

In particular, after each positioning step 260, the emission step 210, the calibration beam formation step 230, the detection step 240 and the comparison step 250 are iterated.

Then, if the current position of the first calibration is identical to the first reference position A1-al and the current position of the second calibration point A2 is identical to the second reference position A2-al, the illumination system 10 is already aligned and deactivation step 270 can optionally be performed.

Otherwise, a new set of incremental positioning instructions is determined and positioning step 260 is performed according to this new set of positioning instructions.

The self-aligning illumination system 15 according to the invention allows alignment or realignment of the illumination direction of the illumination beam 84 with the predetermined illumination alignment direction Y1 as often as needed, even during operation of the self-aligning illumination system for illumination of one or more element of the quantum system 10.

In case the sampling unit 45 is configured for forming the illumination beam 84 from more than for example 90% of the output beam 82, an alignment of the self-aligning system 15 can be performed at the same time as an illumination of one or more element of the quantum system 10.

Deactivation of the sampling unit 45 allows an illumination with higher power after alignment.

The (re)alignment of the self-aligning illumination system 15 is allowed by merely moving the alignment unit 30 based on the positioning instructions, which are automatically determined by the calculator 60. The moving of the alignment unit 30 can be performed in an automated manner, and with a high level of precision.

In particular, the step-by-step moving means of the alignment unit 30 can be configured for allowing an angular offset α of less than a few microradians (µrad), the resolution of the angular offset being the one of the moving mirrors sets. The step-by-step moving means of the alignment unit 30 can be configured for allowing a translational offset δ of less than 1 micrometer. For example, based on an angular resolution of 20 µrad and a distance between the two rotating mirrors of 50mm, the translational offset can be of 1 micrometer.

The first embodiment of the method for aligning the self-aligning system 15 allows (re)aligning this system with a positioning step 260.

The second embodiment of the method for aligning the self-aligning system 15 allows (re)aligning this system in an incremental manner, such that, starting from a precedingly aligned position, the self-aligning system 15 can be very quickly and efficiently realigned, in a self-adapting manner.

The person skilled in the art will understand that the embodiments and variants described above in the description can all be combined provided that they are technically compatible. Many other embodiments are possible without departing from the scope of the invention defined in the appended claims.

## Claims

1. Self-aligning illumination system (15) for a quantum system (10) comprising:
a) a light source (20), configured for emitting an input light beam (70) having an initial direction;
b) an alignment unit (30), configured for forming from the input light beam (70) an output beam (82) having a final direction, the alignment unit (30) being at least partially movable and configured for controlling the final direction in translation along at least one longitudinal axis (Y') and/or in rotation along at least one rotation axis (Z1, Z2, Δ1, Δ2),
at least part of the output beam (82) forming an illumination beam (84) having an illumination direction, the illumination direction being determined by the final direction;
c) a sampling unit (45), configured for forming at least two calibration beams (93, 94) from at least part of the output beam (82);
d) a detection unit (55), comprising at least a first optical sensor (110) having a first detection surface (D1) and a second optical sensor (115) having a second detection surface (D2), the detection unit (55) being configured for forming, from the at least two calibration beams, at least a first calibration point (A1) on the first detection surface (D1) and a second calibration point on the second detection surface (D2), the first and second calibration points being respectively representative of a first position and a second position of the illumination beam (84) after respectively a first travel distance and a second travel distance along the illumination direction, the first travel distance being greater than the second travel distance,
e) an electronic control device (60) receiving data from the detection unit (55) and configured for:
- comparing a position of the first calibration point (A1) with a first reference position (A1-al) and a position of the second calibration point (A2) with a second reference position (A2-al), and
- for determining at least one positioning instruction of the alignment unit (30) based on the comparison, such that, once the alignment unit (30) is positioned according to said positioning instruction, the illumination direction is aligned with a predetermined direction (Y1).

2. Self-aligning illumination system (15) according to the preceding claim, further comprising an actuating unit (92) configured for positioning the alignment unit (30) according to the at least one positioning instruction.

3. Self-aligning illumination system (15) according to any of the preceding claims, in which the alignment unit (30) has at least four degrees of freedom in translation and/or in rotation.

4. Self-aligning illumination system (15) according to any of the preceding claims, in which the alignment unit (30) comprises at least two rotatable mirrors (85, 90), each rotatable mirror (85, 90) being rotatable relative to at least two respective rotation axes (Z1, Z2, Δ1, Δ2).

5. Self-aligning illumination system (15) according to any of the preceding claims, in which the first and/or the second optical sensor (110, 115) is chosen among a four quadrant photodetector and a camera.

6. Self-aligning illumination system (15) according to any of the preceding claims, in which the sampling unit (45) comprises a beam sampler (95).

7. Self-aligning illumination system (15) according to the preceding claim, in which the sampling unit (45) further comprises a beam splitter (100).

8. Self-aligning illumination system (15) according to any of the preceding claims, further comprising a polarizing unit (65) configured for selecting part (70A) of the input light beam (70) having a specific polarization upstream the alignment unit (30).

9. Self-aligning illumination system (15) according to the preceding claim, in which the polarizing unit (65) comprises a polarizing beam splitter (72) between two half-wave plates (75, 80).

10. Quantum system (10) comprising a self-aligning illumination system (15) according to any of the preceding claims.

11. Quantum system (10) according to the preceding claim, in which the illumination beam (84) is configured for trapping at least one particle in a trapping site or for exciting at least one particle.

12. Alignment method for aligning the light source (20) of the self-aligning illumination system (15) according to any of claims 1 to 9, the method comprising:
a) with the light source (20), emitting an input light beam (70) having an initial direction towards the alignment unit (30);
b) with the alignment unit (30), forming the output beam (82);
c) with the sampling unit (45), forming at least one calibration beam (93, 94) from at least part of the output beam (82);
d) with the detection unit (55), detecting a respective first calibration point (A1) and a respective second calibration point (A2);
e) with the calculator, comparing a position of the first calibration point (A1) with the first reference position (A1-al) and a position of the second calibration point (A2) with the second reference position (A2-al), and if at least one of said positions is different from the respective reference position (A1-al, A2-al), determining at least one positioning instruction of the alignment unit (30); and
f) positioning the alignment unit (30) according to said at least one positioning instruction.

13. Alignment method according to the preceding claim, in which the alignment unit (30) comprises at least two rotatable mirrors (85, 90) and the at least one positioning instruction comprises:
* if the position of the first calibration point is offset from the first reference position (A1-al) and :
- if the position of the second calibration point (A2) is offset from the second reference position (A2-al), instructions of moving the two rotatable mirrors (85, 90),
- if not : instructions of moving only any one of the rotatable mirrors (85, 90), and
* if not:
- if the position of the second calibration point is offset from the second reference position (A2-al), instructions of moving only any one of the rotatable mirrors (85, 90).

14. Alignment method according to the preceding claim, in which the at least one moving instruction is incremental, step a) to e) and, if applying, step f) being iterated after each iteration of step f).

15. Alignment method according to any of claims 12 to 14, further comprising after f):
e) deactivating the sampling unit (45), such that the illumination beam (84) is formed from the entire output beam (82).
